# EUROPEAN PATENT SPECIFICATION

(11) **EP 4 000 369 B1**
(45) Date of publication and mention of the grant of the patent: **30.08.2023**
(21) Application number: 21202413.7
(22) Date of filing: 13.10.2021
(51) Int. Cl.: A01D 34/64, F01P 1/06

(54) **RIDING LAWN MOWER**
AUFSITZRASENMÄHER
TONDEUSE À GAZON AUTOPORTÉE

(30) Priority: 17.11.2020 JP 2020191157
(43) Date of publication of application: 25.05.2022
(73) Proprietor: Iseki & Co., Ltd., Matsuyama-shi, Ehime 799-2692 (JP)
(72) Inventor: KURITA, Kazuyuki, Iyo-gun, 791-2193 (JP); WATANABE, Tomoaki, Iyo-gun, 791-2193 (JP); TSUNASHIMA, Taro, Iyo-gun, 791-2193 (JP); MASUDA, Ryutaro, Iyo-gun, 791-2193 (JP)
(74) Representative: TBK

(56) References cited:
- JP-A- 2012 026 326
- JP-A- 2015 019 612
- JP-B2- 5 805 023
- JP-B2- 6 449 020
- US-B1- 8 955 296

## Description

### BACKGROUND OF THE INVENTION

### 1. Field of the Invention

The present invention relates to a riding lawn mower.

### 2. Description of the Related Art

In the related art, there has been a riding lawn mower including a traveling vehicle body, a mower device for lawn mowing connected to the traveling vehicle body, a driver seat disposed in a front portion of the traveling vehicle body, an engine room for accommodating an engine in a rear portion of the traveling vehicle body, and a radiator provided on one of left and right sides of the engine room (see, for example, JP-A-2019-47757 (Patent Literature 1)).

Some riding lawn mowers, as disclosed in JP5805023B2 or US8955296B1, are equipped with an electronic control engine in order to reduce harmful substances contained in exhaust gas discharged from the engine. Therefore, in the riding lawn mower, it is necessary to provide an engine control device for controlling the engine in any one of traveling vehicle bodies in association with the mounting of the electronic control engine.

However, when the riding lawn mower in the related art is provided with the engine control device that is precision equipment, a temperature of the engine control device may rise excessively due to heat of the engine. If the temperature of the engine control device rises excessively, the engine control device may fail.

### SUMMARY OF THE INVENTION

The invention has been made in view of the above, and an object of the invention is to provide a riding lawn mower capable of preventing a failure of an engine control device.

In order to solve the above-described problems and achieve the purpose, a riding lawn mower (1) according to an embodiment includes: a traveling vehicle body (2) having traveling wheels (22, 23); a mower device (3) for lawn mowing connected to the traveling vehicle body (2); a driver seat (241) disposed in a front portion of the traveling vehicle body (2); an engine (51) disposed in a rear portion of the traveling vehicle body (2); and an engine fan (52) disposed in front of the engine (51). The riding lawn mower (1) further includes: an engine control device (71) disposed in front of the engine fan (52) and controlling the engine (51). The engine control device (71) has a flat outer shape, and is erected with a surface having a large area facing a front-rear direction.

According to the riding lawn mower of the embodiment, it is possible to prevent the failure of the engine control device.

### BRIEF DESCRIPTION OF THE DRAWINGS

FIG. 1 is a side view showing an overall configuration of a riding lawn mower according to an embodiment.
FIG. 2 is a transmission line diagram showing a transmission configuration of the riding lawn mower according to the embodiment.
FIG. 3 is a block diagram showing a control system of the riding lawn mower according to the embodiment.
FIG. 4 is a perspective view showing an attachment state of an engine control device.
FIG. 5 is a perspective view showing an attachment state of a first bracket.
FIG. 6 is a perspective view showing a routing state of a harness with respect to a lateral frame portion.
FIG. 7A is a perspective view (part 1) showing a vehicle body control device.
FIG. 7B is a perspective view (part 2) showing the vehicle body control device.
FIG. 8 is a perspective view showing an arrangement of an exhaust gas purification device.
FIG. 9 is a perspective view showing an exhaust gas purification device bracket.
FIG. 10A is a perspective view showing a holding portion of the exhaust gas purification device bracket.
FIG. 10B is a perspective view showing an attachment portion of the exhaust gas purification device bracket.
FIG. 11A is an illustrative view (part 1) of the exhaust gas purification device bracket.
FIG. 11B is an illustrative view (part 1) of a holding state of the exhaust gas purification device by the exhaust gas purification device bracket.
FIG. 12A is an illustrative view (part 2) of the exhaust gas purification device bracket.
FIG. 12B is an illustrative view (part 2) of the holding state of the exhaust gas purification device by the exhaust gas purification device bracket.

### DESCRIPTION OF THE PREFERRED EMBODIMENTS

Hereinafter, an embodiment of a riding lawn mower disclosed in the present application will be described in detail with reference to the accompanying drawings. The invention is not limited to the embodiment described below.

### <Overall Configuration of Riding Lawn Mower 1>

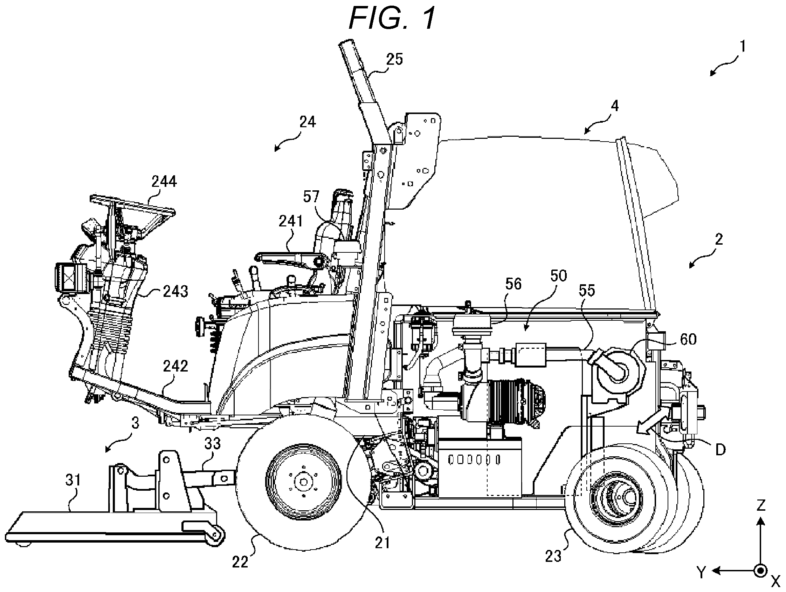

First, an overall configuration of a riding lawn mower 1 according to an embodiment will be described with reference to FIG. 1. FIG. 1 is a side view showing an overall configuration of the riding lawn mower 1 according to an embodiment. In FIG. 1, an engine room 50 is shown in a see-through manner.

Each drawing shows a three-dimensional orthogonal coordinate system including a Z axis whose vertically upward direction (upward direction) is a positive direction. Hereinafter, for convenience of description, the positive direction of an X axis is defined as left, a negative direction of the X axis is defined as right, the positive direction of a Y axis is defined as front, and the negative direction of the Y axis is defined as rear. Therefore, hereinafter, an X-axis direction is referred to as a left-right direction, a Y-axis direction is referred to as a front-rear direction, and a Z-axis direction is referred to as an upper-lower direction.

The riding lawn mower 1 is operated by an operator (also referred to as a worker) seated in a driver seat 241 provided in a front portion of a traveling vehicle body 2 including a vehicle body frame 21. Hereinafter, the riding lawn mower 1 may be referred to as a vehicle body.

As shown in FIG. 1, the riding lawn mower 1 includes, as traveling wheels of the traveling vehicle body 2, a pair of left and right front wheels 22 at the front portion of the traveling vehicle body 2, and a pair of left and right rear wheels 23 at a rear portion of the traveling vehicle body 2.

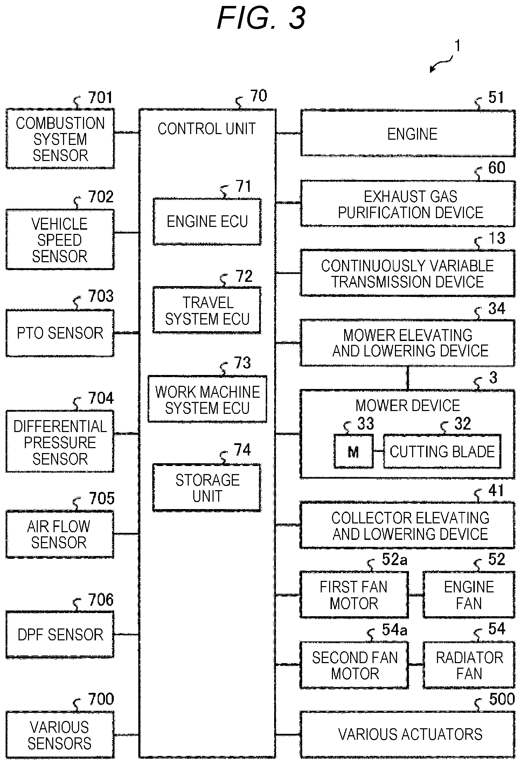

The riding lawn mower 1 includes a mower device 3 having a cutting blade 32 that rotates around a vertical shaft (a shaft along the upper-lower direction in FIG. 1) in a lower portion of the driver seat 241, and a motor 33 that drives the cutting blade 32 (both refer to FIG. 3). The mower device 3 is attached to a front side of the front wheels 22 through a mower elevating and lowering device 34 so as to be freely elevated and lowered. The riding lawn mower 1 may be of a type in which the mower device 3 is disposed below the traveling vehicle body 2 and between the front wheels 22 and the rear wheels 23 in the front-rear direction.

The riding lawn mower 1 includes an operation portion 24 at the front portion of the traveling vehicle body 2. The operation portion 24 includes the driver seat 241, a floor step 242, a steering column 243, and a steering wheel 244.

The floor step 242 is provided in front of the driver seat 241. The steering column 243 is erected on a front portion of the floor step 242. The steering wheel 244 is provided above the steering column 243. In addition to the steering wheel 244, an operation panel, various operation levers, various operation switches, and the like are provided above the steering column 243. A safety bar 25 having an arch shape in a front view of the vehicle body is provided in a rear portion of the operation portion 24 so as to be tiltable in the front-rear direction.

A collector 4, which is a grass collection container, is provided behind the driver seat 241 in an upper portion of the traveling vehicle body 2. That is, in the riding lawn mower 1, the collector 4 that accommodates lawn grass or the like mowed by the mower device 3 (hereinafter, referred to as lawn grass) is mounted above a bonnet covering the engine room 50 so as to be capable of being elevated and lowered in the upper-lower direction through an elevating and lowering arm (not shown). The elevating and lowering arm constitutes a collector elevating and lowering device 41 (see FIG. 3) together with an elevating and lowering cylinder (not shown) and the like.

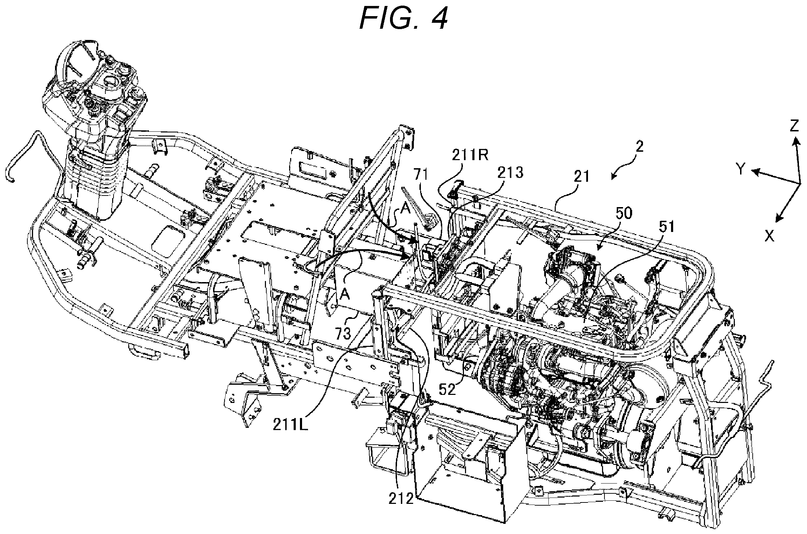

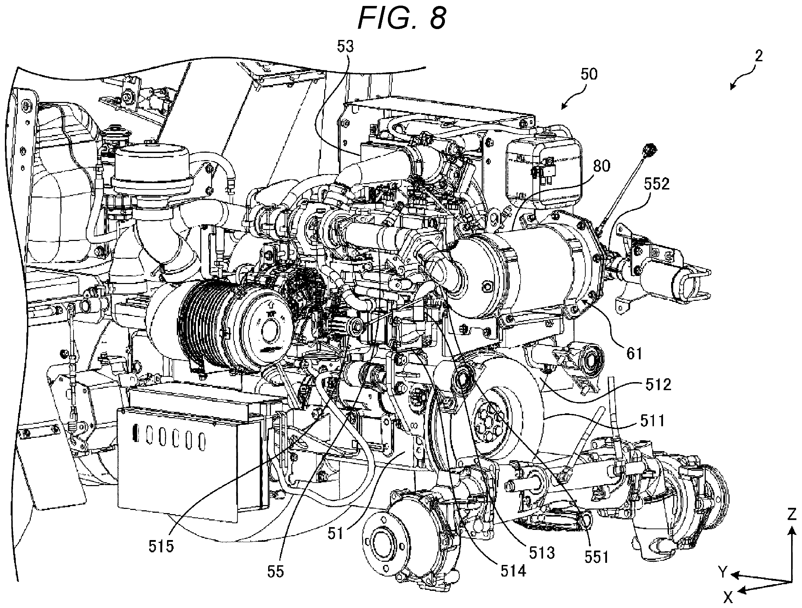

The riding lawn mower 1 includes the engine room 50 below the collector 4 and behind the driver seat 241, and an engine 51 (see FIG. 4) is mounted inside the engine room 50. The riding lawn mower 1 includes a bonnet that covers the engine 51 in an upper portion of the engine room 50. An engine fan 52 (see FIG. 4) is provided on the bonnet. A radiator 53 (see FIG. 8) is disposed on one of left and right sides (for example, the right side) of the engine 51.

The engine 51 and an exhaust gas purification device 60 that purifies exhaust gas discharged from the engine 51 are arranged inside the engine room 50. The exhaust gas purification device 60 is provided in the middle of an exhaust pipe 55 for guiding the exhaust gas from the engine 51 to the outside of the vehicle body. The engine 51 is, for example, a diesel engine including a supercharger (turbocharger). Alternatively, for example, the supercharger may not be provided.

The exhaust gas purification device 60 is a device that purifies the exhaust gas discharged from the engine 51, and stores, for example, a filter called a diesel particulate filter (DPF), and collects particles by passing the exhaust gas through the DPF. The exhaust gas purification device 60 has, for example, a regeneration function of burning out accumulated particles by combustion in order to prevent clogging of the DPF due to accumulation of the collected particles.

The riding lawn mower 1 further includes an air cleaner 56 for supplying clean air to the engine 51. The air cleaner 56 is connected to a pre-cleaner 57 disposed in the vicinity of the driver seat 241. The air cleaner 56 is provided, for example, in the vicinity of the vehicle body outside the vehicle body, so that a degree of freedom of routing is higher than that provided inside the vehicle body.

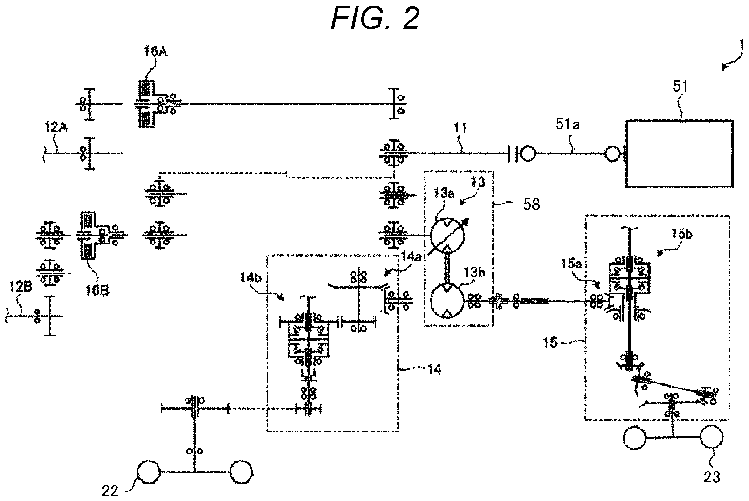

Although not shown, the riding lawn mower 1 includes a transmission case 58 (see FIG. 2) to which power from the engine 51 is transmitted. The transmission case 58 is disposed, for example, in a lower portion of the engine 51 near the driver seat 241.

Although not shown, the riding lawn mower 1 includes a blower case in which a blower is installed. The blower case and the collector 4 are connected by a duct. Further, a chute is provided between the blower and the mower device 3.

As described above, in the riding lawn mower 1, the lawn grass mowed by the mower device 3 is sent from a mower deck 31 to the blower via the chute, and is further air-conveyed to the collector 4 via the duct.

Further, a lawn grass discharge port is formed at a terminal end portion of the duct. The lawn grass discharge port serves as a connection portion with the collector 4. That is, when the collector 4 is located at a normal position where the collector 4 is lowered, a lawn grass feed port and the lawn grass discharge port of the collector 4 are overlapped with each other, and the duct and the collector 4 are connected to each other. The lawn grass mowed by the mower device 3 is sent to the inside of the collector 4 through the chute and the duct by the blower.

### <Transmission Configuration of Riding Lawn Mower 1>

Next, a transmission configuration of the riding lawn mower 1 will be described with reference to FIG. 2. FIG. 2 is a transmission line diagram showing the transmission configuration of the riding lawn mower 1 according to the embodiment.

As shown in FIG. 2, in the riding lawn mower 1, power (rotational power) output from the engine 51 is transmitted to a distribution transmission shaft 11 connected to an output shaft 51a of the engine 51, and is transmitted to a first power take-off (PTO) shaft (also referred to as a blower PTO shaft) 12A. Rotational power output from the blower PTO shaft 12A is transmitted to the blower through, for example, a blower transmission device (a gear transmission device or the like). In the drawings, reference numerals 16A and 16B denote PTO clutches.

Rotational power output from the distribution transmission shaft 11 is transmitted to drive wheels through a traveling transmission device. That is, a trunnion shaft is tilted through a hydraulic pump 13a of a hydraulic continuously variable transmission device (also referred to as hydrostatic transmission (HST)) 13 stored in the transmission case 58 to change a speed of a hydraulic motor 13b.

The riding lawn mower 1 is configured to be switchable between two-wheel drive (2WD) and four-wheel drive (4WD). Therefore, when the riding lawn mower 1 is 2WD, the drive wheels are either the left and right front wheels 22 or the left and right rear wheels 23 (for example, the left and right front wheels 22), and when the riding lawn mower 1 is 4WD, the driving wheels are the left and right front wheels 22 and the left and right rear wheels 23.

In the case of 4WD, the rotational power output from the distribution transmission shaft 11 is transmitted to the front wheels 22 through the hydraulic pump 13a and the hydraulic motor 13b of the HST 13 and through a gear transmission device 14a and a differential mechanism 14b in a differential case 14. The rotational power output from the distribution transmission shaft 11 is transmitted to the rear wheels 23 through the hydraulic pump 13a and the hydraulic motor 13b of the HST 13 and through a gear transmission device 15a and a differential mechanism 15b in a differential case 15.

The rotational power output from the distribution transmission shaft 11 is transmitted to a second PTO shaft (also referred to as a mower PTO shaft) 12B. Rotational power output from the mower PTO shaft 12B is transmitted to the above-described cutting blade 32 (see FIG. 3) through a mower input shaft (not shown) and a mower transmission device (not shown) in the mower deck 31 (see FIG. 1).

### <Control System of Riding Lawn Mower 1>

Next, a control system of the riding lawn mower 1 centering on a control unit 70 will be described with reference to FIG. 3. FIG. 3 is a block diagram showing the control system of the riding lawn mower 1 according to the embodiment.

As shown in FIG. 3, the control unit 70 can control various actuators 500 included in the riding lawn mower 1 and other units by electronic control, and includes, for example, a processing unit having a central processing unit (CPU) .

The control unit 70 includes a storage unit 74 that stores a program for performing drive control of a first fan motor 52a that drives the engine fan 52 and a second fan motor 54a that drives a radiator fan 54, and data necessary for driving the various actuators 500 and the like. The storage unit 74 includes, for example, a hard disk, a read only memory (ROM), and a random access memory (RAM).

The control unit 70 includes an engine electronic control unit (ECU) 71 that is an engine control device that controls the engine 51, a traveling system ECU 72 that is a vehicle body control device that controls traveling of the traveling vehicle body 2, and a work machine system ECU 73 that is a vehicle body control device that controls driving of the mower device 3.

The engine ECU 71 controls output of the engine 51 and the like. The traveling system ECU 72 controls the continuously variable transmission device (HST) 13 and the like to control the traveling of the vehicle body. The work machine system ECU 73 controls driving of the mower device 3. The work machine system ECU 73 controls a solenoid valve or the like for turning on and off the PTO clutches 16A and 16B (see FIG. 2), and also controls the mower elevating and lowering device 34 to control elevating and lowering of the mower device 3.

Various sensors 700 including a combustion system sensor 701, a vehicle speed sensor 702, a PTO sensor 703, a differential pressure sensor 704, an air flow sensor 705, and a DPF sensor 706 are connected to the control unit 70.

The combustion system sensor 701 detects a combustion state of the engine 51. The vehicle speed sensor 702 is a sensor that calculates a traveling speed (vehicle speed) of the vehicle body, and derives an actual measurement value of the vehicle speed from a rotation speed of the front wheels 22 and the rear wheels 23 (both refer to FIG. 2). The PTO sensor 703 detects rotation of the blower PTO shaft 12A and the mower PTO shaft 12B (both refer to FIG. 2).

The differential pressure sensor 704 is a sensor that detects exhaust pressure in front of and behind the exhaust gas purification device 60 connected in the middle of the exhaust pipe 55 (see FIG. 1). The air flow sensor 705 is a sensor that detects an amount of air supplied to the engine 51, and is provided in the air cleaner 56 (see FIG. 1).

The DPF sensor 706 is a sensor that detects a degree of clogging of the DPF accommodated in the exhaust gas purification device 60.

The control unit 70 acquires various pieces of data in each unit, and controls the operation of each unit of the vehicle body based on the acquired data, a result calculated based on the data, and the like.

Here, when the engine ECU 71 is provided in the engine room 50 (see FIG. 1), a temperature of the engine ECU 71 may be excessively increased by the heat of the engine 51. When the temperature of the engine ECU 71 excessively increases, the engine ECU 71 may fail. Therefore, in the present embodiment, the temperature rise of the engine ECU 71 is prevented.

### <Arrangement of Engine ECU 71>

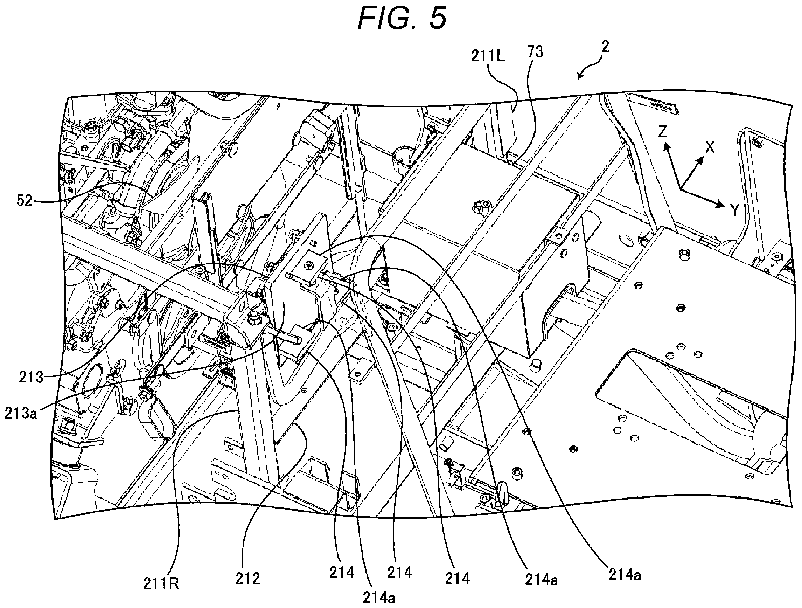

Next, an arrangement of the engine ECU 71 will be described with reference to FIGS. 4 and 5. FIG. 4 is a perspective view showing an attachment state of the engine control device (engine ECU) 71. FIG. 5 is a perspective view showing an attachment state of the first bracket 213.

As shown in FIG. 4, the engine ECU 71 has a flat outer shape (a housing of the engine ECU 71). The engine ECU 71 is disposed in front of the engine fan 52 that sends cooling air toward the engine 51 in the engine room 50. In this case, the engine ECU 71 is erected such that a surface of a housing of the engine ECU 71 having a larger area is toward the front-rear direction.

That is, the engine ECU 71 is vertically disposed in front of the engine fan 52, and surfaces having a large area are arranged along the front-rear direction, and surfaces (side surfaces) having a small area are arranged along the left-right direction. In this way, by vertically disposing the engine ECU 71, a space in the engine room 50 can be effectively utilized. Since the engine ECU 71 is located in front of the engine fan 52, a flow of air A generated when the engine fan 52 blows air toward the engine 51 can be used for cooling, and a place where a large amount of dust is present, such as a place in front of the radiator 53, can be avoided.

The vehicle body frame 21 of the traveling vehicle body 2 is provided so as to surround the engine 51. The vehicle body frame 21 also constitutes a frame of the engine room 50. The vehicle body frame 21 includes left and right frame portions (a left frame portion 211L and a right frame portion 211R), a lateral frame portion 212, the first bracket 213, and a second bracket 215.

The left frame portion 211L and the right frame portion 211R are erected on left and right side portions of the traveling vehicle body 2. The lateral frame portion 212 is provided between the left frame portion 211L and the right frame portion 211R, and connects the left frame portion 211L and the right frame portion 211R. The lateral frame portion 212 connects the left frame portion 211L and the right frame portion 211R to each other in front of the engine 51.

The first bracket 213 is attached to the lateral frame portion 212. The engine ECU 71 is attached to the first bracket 213. The first bracket 213 fixes the engine ECU 71 to the lateral frame portion 212. Hereinafter, the first bracket 213 is referred to as an engine ECU bracket.

As shown in FIG. 5, the engine ECU bracket 213 has rubber mounts 214 as buffer materials. The rubber mounts 214 are disposed at three positions at predetermined intervals on an attachment plate 213a of the engine ECU bracket 213. The three rubber mounts 214 are disposed, for example, at positions corresponding to vertices of an equilateral triangle or an isosceles triangle in a rear view of the vehicle body. The three rubber mounts 214 are disposed at a predetermined distance from a plate surface of the attachment plate 213a through support members 214a, respectively.

The engine ECU bracket 213 fixes the engine ECU 71 through the three rubber mounts 314. Since the engine ECU bracket 213 fixes the engine ECU 71 through the three rubber mounts 314, transmission of vibration to the engine ECU 71 can be prevented.

The work machine system ECU 73 that controls driving of the mower device 3 (see FIG. 1) is disposed in the vicinity of the engine ECU 71 (for example, on the left side of the engine ECU 71). The second bracket 215 fixes the work machine system ECU 73 to the lateral frame portion 212. Hereinafter, the second bracket 215 is referred to as a work machine system ECU bracket. That is, the work machine system ECU bracket 215 is attached to the lateral frame portion 212, and the work machine system ECU 73 is attached to the work machine system ECU bracket 215.

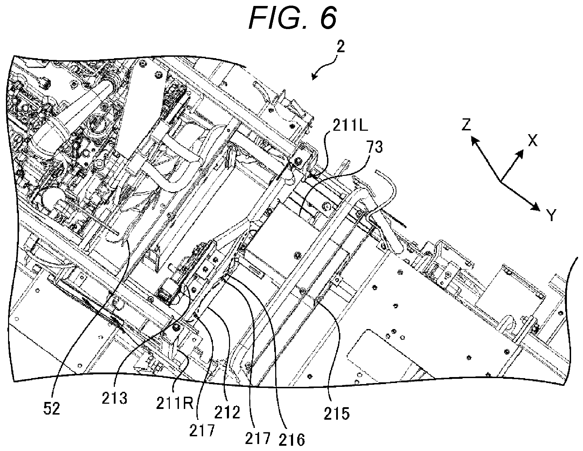

FIG. 6 is a perspective view showing a routing state of a harness 216 with respect to the lateral frame portion 212. As shown in FIG. 6, the harness 216 connected to the work machine system ECU bracket 215 is routed in the lateral frame portion 212. A harness fixing portion 217 for fixing a part of the harness 216 is attached to the lateral frame portion 212.

In this way, since the harness 216 connected to the work machine system ECU bracket 215 is routed using the lateral frame portion 212, strength of the routing state of the harness 216 is increased, and quality can be stabilized. Since the work machine system ECU 73 is fixed to the lateral frame portion 212 similarly to the engine ECU 71, the work machine system ECU 73 and the engine ECU 71 can be disposed close to each other, so that assemblability is improved and space saving can be achieved.

In the present embodiment, the work machine system ECU 73 is disposed in the vicinity of the engine ECU 71 through the work machine system ECU bracket 215, whereas the travel system ECU 72 that controls the traveling of the travel vehicle body 2 may be disposed instead of the work machine system ECU 73. Also in this case, a bracket to which the travel system ECU 72 is attached is attached to the lateral frame portion 212, and the traveling system ECU 72 is fixed to the lateral frame portion 212.

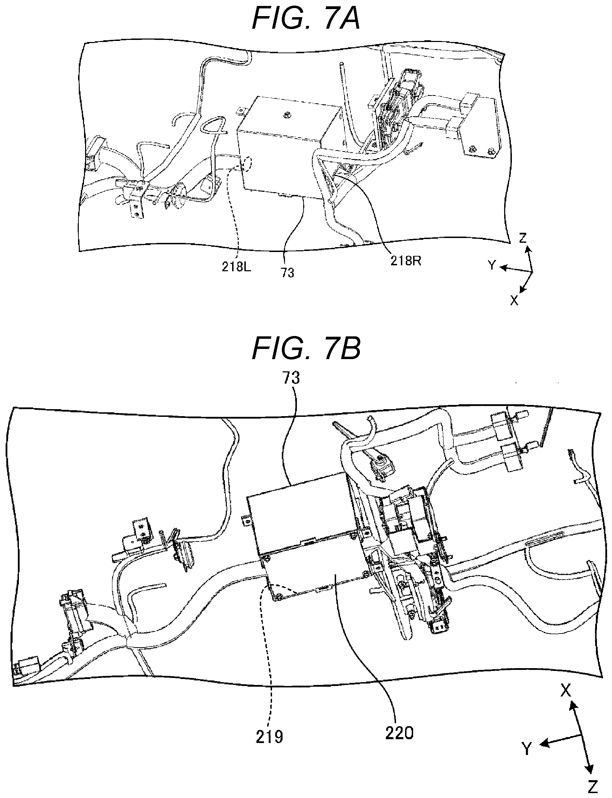

FIGS. 7A and 7B are perspective views showing the vehicle body control device (work machine system ECU) 73. FIG. 7A shows the work machine system ECU 73 as viewed obliquely from above. FIG. 7B shows the work machine system ECU 73 as viewed obliquely from below. In the work machine system ECU 73, all devices such as a relay and a controller are accommodated in a housing thereof.

As shown in FIG. 7A, a wiring outlet 218F for taking out wiring such as the harness 216 is formed on a front portion (front surface) of the work machine system ECU 73. A wiring outlet 218R for taking out the wiring such as the harness 216 is also formed in a rear portion (rear surface) of the work machine system ECU 73. In this way, since the wiring outlets 218F and 218R are formed not only in one direction of the work machine system ECU 73 but also in front of and behind the work machine system ECU 73, the wiring can be divided in front of and behind the work machine system ECU 73, thereby improving the assemblability.

As shown in FIG. 7B, the work machine system ECU 73 has an opening 219 in the lower surface (bottom surface) thereof, and the bottom surface is opened. The work machine system ECU 73 has a bottom lid 220 that closes the opening 219. In this way, since the work machine system ECU 73 is opened, when the work machine system ECU 73 is assembled, wiring or the like can be easily inserted into the housing, and the assemblability is improved.

As described above, according to the riding lawn mower 1 of the embodiment, the engine ECU 71 is disposed in front of the engine fan 52, and the surface having a large area is erected in the front-rear direction, so that the engine ECU 71 can receive the cooling air of the engine fan 52 on the surface having the large area. Accordingly, the temperature rise of the engine ECU 71 can be prevented, and the failure of the engine ECU 71 can be prevented.

Further, by fixing the engine ECU 71 to the lateral frame portion 212 by the engine ECU bracket 213, the engine ECU 71 can be disposed in front of the engine 51 at a position where the cooling air of the engine fan 52 hits. Accordingly, the temperature rise of the engine ECU 71 can be prevented.

Since the engine ECU 71 is fixed at three points through the three rubber mounts 214, vibration to the engine ECU 71 can be prevented and the vibration can be prevented in a balanced manner, and the engine ECU 71 can be stably fixed.

By fixing the work machine system ECU 73 to the lateral frame portion 212, both the engine ECU 71 and the work machine system ECU 73 are fixed to the lateral frame portion 212. In this way, by fixing both of the two ECUs (the engine ECU 71 and the work machine system ECU 73) to the lateral frame portion 212, the harness 216 connecting the two ECUs 71 and 73 can be shortened, and for example, the harness 216 is not entangled with the lateral frame portion 212, and can be routed neatly (with good appearance).

When the exhaust gas purification device 60 is provided in the engine room 50 (see FIG. 1), the exhaust gas purification device 60 may vibrate greatly. In the present embodiment, the exhaust gas purification device 60 is configured to prevent the vibration.

### <Arrangement of Exhaust Gas Purification Device 60>

Next, an arrangement of the exhaust gas purification device 60 will be described with reference to FIG. 8. FIG. 8 is a perspective view showing the arrangement of the exhaust gas purification device 60.

As shown in FIG. 8, an engine 51 is disposed in a rear portion of the traveling vehicle body 2 (a rear portion in the engine room 50). The engine 51 includes a flywheel 511 attached to a crankshaft. The flywheel 511 has a disk shape and is a member that averages and stabilizes the power of the engine 51. Since the flywheel 511 is a heavy member in a vibration system of the engine 51, the flywheel 511 is disposed at a rear end portion of a main body (a main body of the engine 51) due to the structure of the engine 51.

The exhaust gas purification device 60 is disposed in a rear portion of the traveling vehicle body 2 (a rear portion in the engine room 50). The exhaust gas purification device 60 is disposed in the vicinity of the flywheel 511 through an exhaust gas purification device bracket (hereinafter, referred to as a DPF bracket) 80, which will be described later, disposed substantially directly above the flywheel 511. The exhaust gas purification device 60 is disposed substantially directly above the flywheel 511 through the DPF bracket 80.

In this way, the exhaust gas purification device 60 is disposed substantially directly above the flywheel 511, that is, at a position close to a center of gravity of the engine 51, and thus the vibration of the exhaust gas purification device 60 can be prevented. Since a length of a DPF bracket 61 for fixing the exhaust gas purification device 60 (a length of a stay for supporting the exhaust gas purification device 60) can be shortened, the rigidity is improved. Further, since the exhaust gas purification device 60 is brought close to a drive unit of the engine 51, high temperature air around the exhaust gas purification device 60 can be stirred, and the heat can be prevented from being trapped in the engine room 50.

The exhaust gas purification device 60 is fixed to an engine plate 512 through the DPF bracket 80. Accordingly, since a vibration system of the exhaust gas purification device 60 is the same as the vibration system of the engine 51, when the exhaust gas purification device 60 and the engine 51 are connected to each other through a pipe, it is not necessary to adopt a structure for absorbing vibration with respect to the pipe, a simple pipe structure is obtained, and the assemblability is improved.

The exhaust gas purification device 60 is attached to an upper portion of the DPF bracket 80 and is disposed below the collector 4 (see FIG. 1). That is, the exhaust gas purification device 60 is disposed between the collector 4 and the flywheel 511 in the upper-lower direction.

In the exhaust gas purification device 60, an upstream exhaust pipe 551 of the exhaust pipe 55 is connected to one end of a cylindrical main body, and a downstream exhaust pipe 552 of the exhaust pipe 55 is connected to the other end. A diffuser is preferably provided at an exhaust port at a tip end of the exhaust pipe 55 (the downstream exhaust pipe 552). Accordingly, for example, there is no risk that waste grass is ignited by the high temperature exhaust gas.

### <Exhaust Gas Purification Device Bracket (DPF Bracket) 80>

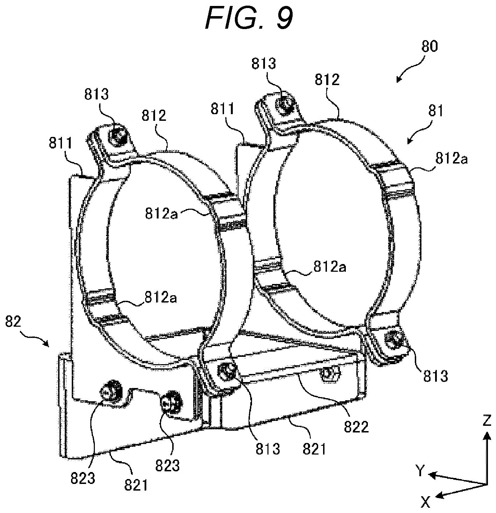

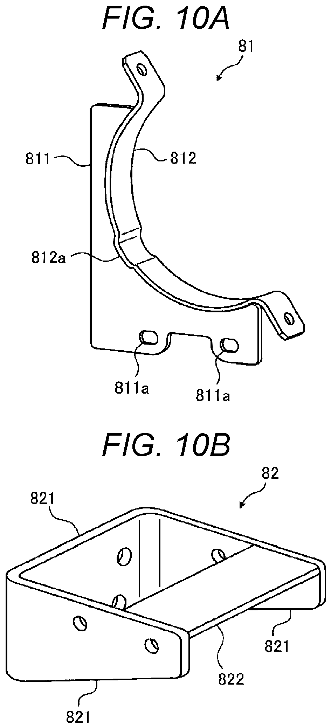

Next, the exhaust gas purification device bracket (DPF bracket) 80 will be described with reference to FIGS. 9 to 12B. FIG. 9 is a perspective view showing the exhaust gas purification device bracket (DPF bracket) 80. FIG. 10A is a perspective view showing a holding portion 81 of the exhaust gas purification device bracket (DPF bracket) 80. FIG. 10B is a perspective view showing an attachment portion 82 of the exhaust gas purification device bracket (DPF bracket) 80.

As shown in FIG. 9, the DPF bracket 80 includes the holding portion 81 and the attachment portion 82. The holding portion 81 is a portion that holds the exhaust gas purification device 60. The holding portion 81 includes stay members 811 and holder members 812. The stay members 811 and the holder members 812 constitute respective pairs of left and right members. In the stay member 811, the holder member 812 is disposed on the stay member 811 so as to be close to a rear side.

The holder member 812 is a member formed in a ring shape, and holds the exhaust gas purification device 60. The holder member 812 is formed to be dividable, and holds the exhaust gas purification device 60 by sandwiching the exhaust gas purification device 60 between two divided semicircular arc members. In this way, since the holder member 812 sandwiches the exhaust gas purification device 60 by the two semicircular arc members, the exhaust gas purification device 60 is tightened and held, and there is an effect of preventing breakage due to the vibration, and since the exhaust gas purification device 60 can be taken out only by removing the semicircular arc member on an outer side (rear side), maintenance performance is improved.

It is preferable that a division line of the holder member 812 is a straight line which is close to parallel to a direction of a principal axis of inertia of the engine 51 (in the present embodiment, an obliquely downward direction on the rear side of the vehicle body indicated by an arrow D in FIG. 1) and passes through a center of the exhaust gas purification device 60 in a side view. Since the vibration generated by the operation of the engine 51 is large in a direction perpendicular to the principal axis of inertia of the engine 51, breakage or the like can be prevented by tightening the exhaust gas purification device 60 in the direction of preventing the vibration.

The holder member 812 has convex portions 812a each formed by being bent outward with respect to an outer peripheral surface of the exhaust gas purification device 60. Since the convex portion 812a is formed in the holder member 812, when the exhaust gas purification device 60 is tightened through a fixing tool 813 such as a bolt and nut, the exhaust gas purification device 60 is tightened while the convex portion 812a extends. Therefore, the exhaust gas purification device 60 can be held such that the entire outer peripheral surface of the exhaust gas purification device 60 is wrapped, and can be firmly held against the vibration.

The stay member 811 extends to the vicinity of the division line of the holder member 812, and is joined by welding at the portion. Therefore, the strength below the exhaust gas purification device 60 can be increased, and stress can be concentrated on the convex portions 812a of the holder member 812 to deform the convex portions 812a. Therefore, no stress is generated when the exhaust gas purification device 60 is tightened at a joint portion between the stay member 811 and the holder member 812, where a load is increased, and the breakage can be prevented.

The attachment portion 82 is a portion that is attached to the engine plate 512 (see FIG. 8) serving as a portion to be attached. The attachment portion 82 is a member formed by bending a plate material so as to have a U shape in a plan view, and further includes a mounting plate 822 installed between the side plate 821 and the side plate 821 facing each other. The exhaust gas purification device 60 is mounted on the mounting plate 822 in a state where the exhaust gas purification device 60 is held by the DPF bracket 80.

The attachment portion 82 protrudes rearward from the engine plate 512, and extends entirely below the exhaust gas purification device 60. The attachment portion 82 supports the exhaust gas purification device 60 from below. In this way, since the attachment portion 82 supports the exhaust gas purification device 60 from below, it is possible to prevent an upper-lower movement of the exhaust gas purification device 60 generated by the vibration of the engine 51 (see FIG. 8) from below, and it is possible to prevent the breakage or the like of the exhaust gas purification device 60.

The holding portion 81 is fixed to the attachment portion 82 by attaching the stay member 811 to a side plate 821 with attachment tools 823 such as the bolt and nut.

As shown in FIG. 10A, each of attachment holes 811a formed in the stay member 811 is an elongated hole elongated in a horizontal direction (front-rear direction). In this way, by forming the attachment hole 811a of the stay member 811 as an elongated hole, it is possible to prevent a strain stress generated when the stay member 811 is attached to the attachment portion 82. By setting a longitudinal direction of the elongated hole, which is the attachment hole 811a, to the horizontal direction, it is possible to prevent the exhaust gas purification device 60 from sinking downward due to the gravity when the stay member 811 is attached to the attachment portion 82.

As shown in FIGS. 10A and 10B, since the DPF bracket 80 is constituted by a plurality of (two) members, that is, the holding portion 81 which directly holds the exhaust gas purification device 60 and the attachment portion 82 to which the holding portion 81 is attached and which is attached to the engine plate 512, maintenance performance is improved such that the replacement of the holding portion 81 and the attachment portion 82 becomes easy. It is possible to prevent distortion caused by backlash at the time of assembly.

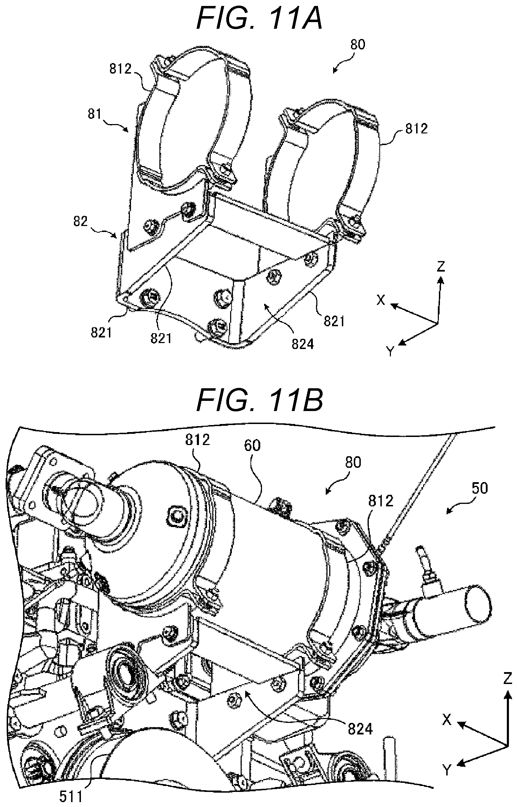

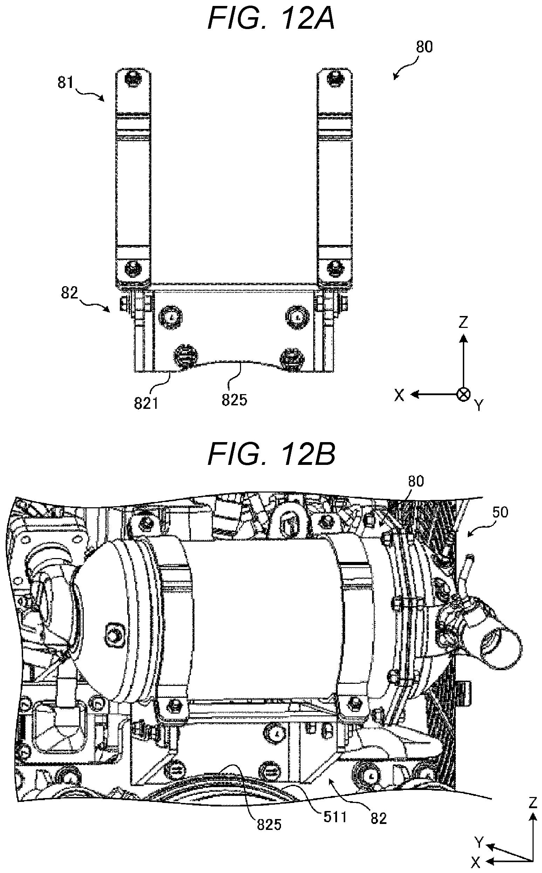

The DPF bracket 80 will be described in more detail with reference to FIGS. 11A to 12B. FIGS. 11A and 12A are illustrative views of the exhaust gas purification device bracket (DPF bracket) 80. FIG. 11A shows the exhaust gas purification device bracket (DPF bracket) 80 as viewed from below. FIG. 12A shows the exhaust gas purification device bracket (DPF bracket) 80 as viewed from the rear surface of the vehicle body.

FIGS. 11B and 12B are illustrative views of a holding state of the exhaust gas purification device 60 by the exhaust gas purification device bracket (DPF bracket) 80. FIG. 11B shows the exhaust gas purification device 60 held by the exhaust gas purification device bracket (DPF bracket) 80 as viewed from below. FIG. 12A shows the exhaust gas purification device 60 held by the exhaust gas purification device bracket (DPF bracket) 80 as viewed from the rear surface of the vehicle body.

As shown in FIGS. 11A and 11B, in the DPF bracket 80, an opening 824 is formed by the attachment portion 82, the opening 824 serving as an open space that opens a space between the exhaust gas purification device 60 and the flywheel 511 arranged in the upper-lower direction. In this way, since the open space (the opening 824) is formed between the exhaust gas purification device 60 and the flywheel 511, high temperature air around the exhaust gas purification device 60 is stirred, and it is possible to prevent the heat from accumulating in the engine room 50.

As shown in FIG. 11B, since the DPF bracket 80 holds the exhaust gas purification device 60 at two positions on the left and right sides with the opening 824 interposed therebetween, the high temperature air around the exhaust gas purification device 60 is stirred without closing the open space (the opening 824) between the exhaust gas purification device 60 and the flywheel 511, and it is possible to prevent the heat from accumulating in the engine room 50.

It is possible to prevent the distortion caused by the backlash at the time of assembly.

As shown in FIGS. 12A and 12B, in the attachment portion 82, a notch 825 is formed in a lower edge of the side plate 821. The notch 825 has an arc shape corresponding to a part of an outer shape of the flywheel 511. That is, the notch 825 having a shape corresponding to a part of the outer shape of the flywheel 511 is formed in a portion facing the flywheel 511 in a lower portion of the DPF bracket 80.

In this way, since the notch 825 is formed in the lower portion of the DPF bracket 80, the exhaust gas purification device 60 can be disposed to be lowered to a limit of interference with the flywheel 511, and the position of the center of gravity of the engine 51 can be brought close to the exhaust gas purification device 60 to prevent the vibration. Since a distance between the exhaust gas purification device 60 and the flywheel 511 is reduced, the effect of preventing the heat from being trapped in the engine room 50 is improved.

Returning to FIG. 8, as shown in the drawing, the riding lawn mower 1 is provided with an exhaust gas recirculation (EGR) pipe 513 in the engine room 50, for returning a part of the exhaust gas from the engine 51 to an intake side of the engine 51. The EGR pipe 513 is provided to extend to the left and right along the rear surface of the engine 51. The EGR pipe 513 is connected to an EGR device (not shown) through an EGR cooler 514 and an EGR valve 515.

As shown in FIG. 8, the exhaust gas purification device 60 is disposed behind the EGR pipe 513 and in the vicinity of the EGR pipe 513 in a posture in which an axis is laid in the left-right direction with respect to the front-rear direction which is a forward movement direction of the traveling vehicle body 2.

As described above, according to the riding lawn mower 1 according to the embodiment, since the flywheel 511 is a heavy component in the vibration system of the engine 51 due to a nature of the flywheel 511, the center of gravity of the engine 51 is close to a flywheel 511 side. By fixing the exhaust gas purification device 60 in the vicinity of the flywheel 511, the exhaust gas purification device 60 can be brought closer to the center of gravity of the engine 51. In this way, since the exhaust gas purification device 60 is disposed in a portion of the engine 51 having a relatively small amplitude, it is possible to prevent the influence of the vibration of the engine 51, and it is possible to stably install the exhaust gas purification device 60.

Since the notch 825 is formed in the DPF bracket 80, the exhaust gas purification device 60 can be brought closer to the flywheel 511 by an amount corresponding to the notch 825. Therefore, the exhaust gas purification device 60 can be brought closer to the center of gravity of the engine 51, and the influence of the vibration of the engine 51 can be prevented. Since the exhaust gas purification device 60 is disposed below the collector 4 and an installation position of the exhaust gas purification device 60 is low, a position where the collector 4 is disposed can also be lowered. Accordingly, the center of gravity of the entire vehicle body is lowered, and traveling stability can be enhanced.

Since the space between the exhaust gas purification device 60 and the flywheel 511 is opened, the heat generated from the exhaust gas purification device 60 is stirred by rotation of the flywheel 511, and the heat in the rear portion of the engine 51 can be prevented from being trapped.

Since the exhaust gas purification device 60 is disposed behind the EGR pipe 513 and in the vicinity of the EGR pipe 513, the EGR pipe 513 can be protected so as to be sandwiched between the exhaust gas purification device 60 and the engine 51.

According to the embodiment described above, the following riding lawn mower 1 is implemented.
(1) The riding lawn mower 1 includes: the traveling vehicle body 2 having the traveling wheels 22 and 23; the mower device 3 for lawn mowing connected to the traveling vehicle body 2; the driver seat 241 disposed in a front portion of the traveling vehicle body 2; the engine 51 disposed in a rear portion of the traveling vehicle body 2; and the engine fan 52 disposed in front of the engine 51. The riding lawn mower 1 further includes: the engine control device 71 disposed in front of the engine fan 52 and controlling the engine 51. The engine control device 71 has a flat outer shape, and is erected with a surface having a large area facing in the front-rear direction.

According to such a riding lawn mower 1, the engine control device 71 can receive the cooling air of the engine fan 52 on the surface having the large area. Accordingly, the temperature rise of the engine control device 71 can be prevented, and the failure of the engine control device 71 can be prevented.

(2) In the above (1), in the riding lawn mower 1, the traveling vehicle body 2 includes the vehicle body frame 21 provided so as to surround the engine 51, and the vehicle body frame 21 includes the left and right frame portions 211L and 211R erected on left and right side portions of the traveling vehicle body 2, the lateral frame portion 212 connecting the left and right frame portions 211L and 211R in front of the engine 51, and the first bracket 213 attached to the lateral frame portion 212 and fixing the engine control device 71 to the lateral frame portion 212.

According to such a riding lawn mower 1, the engine control device 71 can be disposed in front of the engine 51 at a position where the cooling air of the engine fan 52 hits. Accordingly, the temperature rise of the engine control device 71 can be prevented.

(3) In the above (2), in the riding lawn mower 1, the first bracket 213 has three buffer materials 214 disposed at three positions at predetermined intervals, and fixes the engine control device 71 through the three buffer materials 214.

According to such a riding lawn mower 1, since the engine control device 71 is fixed at three points through the three buffer materials 214, it is possible to prevent the vibration to the engine control device 71 and prevent the vibration in a balanced manner, and it is possible to stably fix the engine control device 71.

(4) In the above (2) or (3), the riding lawn mower 1 further includes at least the vehicle body control device 73 that controls driving of the mower device 3. The vehicle body frame 21 includes the second bracket 215 that is attached to the lateral frame portion 212 and fixes the vehicle body control device 73 to the lateral frame portion 212, and the harness 216 that is connected to the vehicle body control device 73 is routed in the lateral frame

According to such a riding lawn mower 1, by fixing the vehicle body control device 73 to the lateral frame portion 212, both the engine control device 71 and the vehicle body control device 73 are fixed to the lateral frame portion 212. In this way, by fixing both of the two control devices (the engine control device 71 and the vehicle body control device 73) to the lateral frame portion 212, the harness 216 connecting the two control devices 71 and 73 can be shortened, and for example, the harness 216 is not entangled with the lateral frame portion 212 and can be routed neatly (with good appearance).

## Claims

1. A riding lawn mower (1) comprising:
a traveling vehicle body (2) having traveling wheels (22, 23);
a mower device (3) for lawn mowing connected to the traveling vehicle body (2);
a driver seat (241) disposed in a front portion of the traveling vehicle body (2);
an engine (51) disposed in a rear portion of the traveling vehicle body (2);
an engine fan (52) disposed in front of the engine (51); **characterized by**
an engine control device (71) disposed in front of the engine fan (52) and configured to control the engine (51), wherein
the engine control device (71) has a flat outer shape, and is erected with a surface having a large area facing a front-rear direction.

2. The riding lawn mower according to claim 1, wherein
the traveling vehicle body (2) includes a vehicle body frame (21) provided so as to surround the engine (51), and the vehicle body frame (21) includes left and right frame portions (211L, 211R) erected on left and right side portions of the traveling vehicle body (2), a lateral frame portion (212) connecting the left and right frame portions (211L, 211R) in front of the engine (51), and a first bracket (213) attached to the lateral frame portion (212) and fixing the engine control device (71) to the lateral frame portion (212) .

3. The riding lawn mower according to claim 2, wherein
the first bracket (213) includes three buffer materials (214) disposed at three positions at predetermined intervals, and fixes the engine control device (71) through the three buffer materials (214).

4. The riding lawn mower according to claim 2 or 3, further comprising:
at least a vehicle body control device (73) that controls driving of the mower device (3), wherein
the vehicle body frame (21) includes a second bracket that is attached to the lateral frame portion (212) and fixes the vehicle body control device (73) to the lateral frame portion (212), and a harness (216) that is connected to the vehicle body control device (73) is routed in the lateral frame portion (212).

## Patentansprüche

1. Aufsitzrasenmäher (1), der aufweist:
einen Fortbewegungsfahrzeugkörper (2), der Fortbewegungsräder (22, 23) hat;
eine Mähvorrichtung (3) zum Rasenmähen, die mit dem Fortbewegungsfahrzeugkörper (2) verbunden ist;
einen Fahrersitz (241), der in einem Vorderabschnitt des Fortbewegungsfahrzeugkörpers (2) angeordnet ist;
eine Kraftmaschine (51), die in einem Hinterabschnitt des Fortbewegungsfahrzeugkörpers (2) angeordnet ist;
ein Kraftmaschinengebläse (52) das vor der Kraftmaschine (51) angeordnet ist; **gekennzeichnet durch**
eine Kraftmaschinensteuervorrichtung (71), die vor dem Kraftmaschinengebläse (52) angeordnet ist und dazu gestaltet ist, die Kraftmaschine (51) zu steuern, wobei
die Kraftmaschinensteuervorrichtung (71) eine flache Außenform hat und aufgerichtet ist, wobei eine Fläche, die einen großen Flächeninhalt hat, in Richtung einer vorne-hinten-Richtung zeigt.

2. Aufsitzrasenmäher gemäß Anspruch 1, wobei
der Fortbewegungsfahrzeugkörper (2) einen Fahrzeugkörperrahmen (21) umfasst, der so vorgesehen ist, dass er die Kraftmaschine (51) umgibt, und der Fahrzeugkörperrahmen (21) linke und rechte Rahmenabschnitte (211L, 211R), die an linken und rechten Seitenabschnitten des Fortbewegungsfahrzeugkörpers (2) aufgerichtet sind, einen lateralen Rahmenabschnitt (212), der die linken und rechten Rahmenabschnitte (211L, 211R) vor der Kraftmaschine (51) verbindet, und eine erste Klammer (213) umfasst, die an dem lateralen Rahmenabschnitt (212) angebracht ist und die Kraftmaschinensteuervorrichtung (71) an den lateralen Rahmenabschnitt (212) fixiert.

3. Aufsitzrasenmäher gemäß Anspruch 2, wobei
die erste Klammer (213) drei Puffermaterialien (214) umfasst, die an drei Positionen an vorbestimmten Intervallen angeordnet sind, und die Kraftmaschinensteuervorrichtung (71) über die drei Puffermaterialien (242) fixiert.

4. Aufsitzrasenmäher gemäß Anspruch 2 oder 3, der ferner aufweist:
mindestens eine Fahrzeugkörpersteuervorrichtung (73), die einen Antrieb der Mähvorrichtung (3) steuert, wobei
der Fahrzeugkörperrahmen (21) eine zweite Klammer umfasst, die an dem lateralen Rahmenabschnitt (212) angebracht ist und die Fahrzeugkörpersteuervorrichtung (73) an dem lateralen Rahmenabschnitt (212) fixiert, und ein Harnisch (216), der mit der Fahrzeugkörpersteuervorrichtung (73) verbunden ist, in dem lateralen Rahmenabschnitt (212) geführt ist.

## Revendications

1. Tondeuse à gazon autoportée (1) comprenant :
un corps de véhicule de déplacement (2) ayant des roues de déplacement (22, 23) ;
un dispositif de tonte (3) pour tondre le gazon relié au corps de véhicule de déplacement (2) ;
un siège de conducteur (241) disposé dans une partie avant du corps de véhicule de déplacement (2) ;
un moteur (51) disposé dans une partie arrière du corps de véhicule de déplacement (2) ; un ventilateur (52) disposé devant le moteur (51) ; **caractérisée par**
un dispositif de commande de moteur (71) disposé devant le ventilateur (52) et configuré pour commander le moteur (51), dans laquelle
le dispositif de commande de moteur (71) présente une forme extérieure plate, et est érigé avec une surface ayant une large zone en face d'une direction avant-arrière.

2. Tondeuse à gazon autoportée selon la revendication 1, dans laquelle
le corps de véhicule de déplacement (2) comprend un châssis de corps de véhicule (21) placé de façon à entourer le moteur (51), et le châssis de corps de véhicule (21) comprend des parties de châssis gauche et droite (211L, 211R) érigées sur des parties latérales gauche et droite du corps de véhicule de déplacement (2), une partie de châssis latérale (212) reliant les parties de châssis gauche et droite (211L, 211R) devant le moteur (51), et un premier support (213) fixé à la partie de châssis latérale (212) et fixant le dispositif de commande de moteur (71) sur la partie de châssis latérale (212).

3. Tondeuse à gazon autoportée selon la revendication 2, dans laquelle
le premier support (213) comprend trois matériaux tampons (214) disposés à trois positions à des intervalles prédéterminés, et fixe le dispositif de commande de moteur (71) par l'intermédiaire des trois matériaux tampons (214).

4. Tondeuse à gazon autoportée selon la revendication 2 ou 3, comprenant en outre
au moins un dispositif de commande de corps de véhicule (73) qui commande l'entraînement du dispositif de tonte (3), dans laquelle
le châssis de corps de véhicule (21) comprend un second support qui est fixé à la partie de châssis latérale (212) et fixe le dispositif de commande de corps de véhicule (73) à la partie de châssis latérale (212), et un harnais (216) qui est relié au dispositif de commande de corps de véhicule (73) est acheminé dans la partie de châssis latérale (212).
